# DEMANDE DE BREVET EUROPEEN

(11) **EP 2 610 743 A1**
(43) Date de publication de la demande: **03.07.2013**
(21) Numéro de dépôt: 12199537.7
(22) Date de dépôt: 27.12.2012
(51) Int. Cl.: G06F 9/44

(54) **Procédé de simulation de l'interface homme-machine d'un appareil**

(30) Priorité: 29.12.2011 FR 1104144
(71) Demandeur: Thales, 92200 Neuilly Sur Seine (FR)
(72) Inventeur: Haurie, Thierry, 49309 Cholet Cedex (FR)
(74) Mandataire: Blot, Philippe Robert Emile

(57) **Abrégé**

L'invention concerne un procédé de simulation de l'interface homme-machine d'un appareil sous forme de succession de vues d'une fenêtre d'affichage sur un écran (42) d'un dispositif programmable, une fenêtre d'affichage (54) comprenant un ensemble d'éléments graphiques, ledit ensemble d'éléments graphiques comprenant au moins un élément graphique actionnable par un utilisateur, agencés selon un agencement propre à ladite interface homme-machine à simuler, chaque vue d'une fenêtre d'affichage correspondant à un état visuel de chaque élément graphique de ladite fenêtre d'affichage parmi une pluralité d'états visuels possible. Le procédé comporte une étape de génération d'une description (56) en langage de balisage associée à l'interface homme-machine à simuler, utilisant un ensemble de balises prédéterminées, comportant, une description (60) de chaque vue de ladite fenêtre d'affichage, et une description (62) de chaque état d'affichage parmi un ensemble d'états d'affichage possibles, chaque état d'affichage étant défini par au moins une vue d'une fenêtre d'affichage et au moins un identifiant d'un état d'affichage suivant.

## Description

La présente invention concerne un procédé de simulation de l'interface homme-machine d'un appareil sous forme de succession de vues d'une fenêtre d'affichage sur un écran d'un dispositif programmable.

L'invention se situe dans le domaine du design des interfaces homme-machine pour des appareils de type appareil portable, téléphone mobile, équipement de communication, chiffreur réseau.

Typiquement, ce genre d'appareil comporte une interface homme-machine, permettant à l'utilisateur d'interagir avec diverses fonctionnalités proposées, une telle interface homme-machine comportant une pluralité d'éléments tels qu'un ou plusieurs écrans d'affichage, un ensemble de boutons actionnables, par exemple un bouton d'allumage « on/off », un ou plusieurs boutons de contrôle, un ou plusieurs voyants lumineux associés.

Il existe un besoin, notamment dans le cadre des développements de nouveaux appareils, de valider et de faire évoluer l'interface homme-machine, d'une part par les concepteurs de l'interface homme-machine, et d'autre part, par de futurs utilisateurs.

De manière traditionnelle, il est connu, en phase de conception, et même ultérieurement, en phase de déploiement, de décrire une telle interface homme-machine d'un appareil à l'aide de planches statiques représentant diverses vues correspondant à divers affichages possibles sur l'interface homme-machine. Clairement, une telle approche est insatisfaisante car elle ne permet pas d'illustrer l'évolution dynamique des vues d'affichage en réponse aux interactions avec l'utilisateur. De plus, dans une phase de validation, une telle approche ne permet pas de tester l'ergonomie d'une interface homme-machine.

Une solution alternative, connue de l'état de la technique, consiste à mettre au point un logiciel dédié à une interface homme-machine d'un appareil à tester, permettant de simuler une succession des vues de l'interface homme-machine en fonction des interactions avec un utilisateur, et de les afficher sur un écran d'ordinateur. Ce type de solution permet de valider une interface-homme machine d'un point de vue ergonomique, et d'une manière plus générale, permet de lancer des tests exhaustifs sur une telle interface homme-machine. Mais une programmation d'un logiciel dédié en langage évolué, comme par exemple le langage C++ ou le langage Javascript, nécessite l'intervention d'un programmeur et un temps de développement non négligeable. Donc une telle solution présente des inconvénients de coût et de durée de mise en oeuvre, ce qui n'est généralement pas compatible avec une phase de conception d'interface homme-machine pour un appareil. De plus, une telle solution suppose une programmation logicielle dédiée pour chaque nouvelle interface homme-machine à tester.

Il existe donc un besoin de remédier aux inconvénients pré-cités, en fournissant un procédé de simulation d'interface homme-machine qui soit plus rapide, plus facile à mettre en oeuvre et facilement réutilisable.

A cet effet, l'invention propose, selon un premier aspect, un procédé de simulation de l'interface homme-machine d'un appareil sous forme de succession de vues d'une fenêtre d'affichage sur un écran d'un dispositif programmable, une fenêtre d'affichage comprenant un ensemble d'éléments graphiques, ledit ensemble d'éléments graphiques comprenant au moins un élément graphique actionnable par un utilisateur, agencés selon un agencement propre à ladite interface homme-machine à simuler, chaque vue d'une fenêtre d'affichage correspondant à un état visuel de chaque élément graphique de ladite fenêtre d'affichage parmi une pluralité d'états visuels possible.

Le procédé est **caractérisé en ce qu'il** comporte une étape de génération d'une description en langage de balisage associée à l'interface homme-machine à simuler, utilisant un ensemble de balises prédéterminées, comportant, une description de chaque vue de ladite fenêtre d'affichage, et une description de chaque état d'affichage parmi un ensemble d'états d'affichage possibles, chaque état d'affichage étant défini par au moins une vue d'une fenêtre d'affichage et au moins un identifiant d'un état d'affichage suivant.

Avantageusement, le procédé de l'invention utilise une description de toute interface homme-machine à l'aide d'un langage de balisage, comme par exemple le langage XML (acronyme de « eXtensible Markup Language »), qui permet de décrire des éléments graphiques et des traitements en utilisant des balises textuelles facilement interprétables. Selon l'invention, un tel langage de balisage est utilisé à la fois pour décrire l'ensemble des vues d'affichage correspondant à une interface homme-machine et un ensemble d'états d'affichage possible, et leur enchaînement dynamique. Une interface homme-machine donnée est ainsi décrite à l'aide d'une description en langage de balisage associée. Par la suite, l'ensemble des étapes de simulation d'une interface homme-machine ayant sa description associée, est identique pour toute interface homme-machine à simuler, et donc réutilisable facilement pour simuler d'autres interfaces homme-machine pour d'autres appareils.

Le procédé selon l'invention peut présenter une ou plusieurs des caractéristiques ci-dessous :
- il comporte les étapes suivantes :
   - affichage sur l'écran d'une vue courante de ladite fenêtre d'affichage correspondant à un état d'affichage courant,
   - en réponse à une action d'un utilisateur sur un des éléments graphiques actionnables, obtention, à partir de ladite description en langage de balisage dudit état d'affichage courant, d'un identifiant d'un état d'affichage suivant, et
   - affichage sur l'écran de la ou des vues successives de ladite fenêtre d'affichage correspondant audit état d'affichage suivant selon ladite description en langage de balisage ;
- ladite description en langage de balisage est stockée dans un fichier de description ;
- ladite description en langage de balisage comporte une première partie de description de chaque vue de ladite fenêtre d'affichage, et une deuxième partie de description de chaque état d'affichage parmi un ensemble d'états d'affichage possibles ;
- une dite description d'état d'affichage comporte au moins une balise action associée à une action effectuée sur un élément graphique actionnable, une dite balise action ayant un attribut dont la valeur indique un état d'affichage suivant ;
- l'obtention d'un identifiant d'un état d'affichage suivant comporte les sous-étapes suivantes :
   - détermination d'une valeur d'attribut correspondant à une action effectuée par un utilisateur sur un élément graphique actionnable,
   - parcours de la description en langage de balisage dudit état d'affichage courant pour déterminer une balise action dont un attribut a une valeur égale à la valeur d'attribut déterminée à l'étape précédente,
   - extraction d'un identifiant indiquant un état d'affichage suivant (Es) à partir d'un attribut de la balise action déterminée ;
- ledit langage de balisage est le langage XML.

Selon un deuxième aspect, l'invention concerne un dispositif de simulation de l'interface homme-machine d'un appareil, sous forme de succession de vues d'une fenêtre d'affichage affichées sur un écran dudit dispositif, une fenêtre d'affichage comprenant un ensemble d'éléments graphiques, ledit ensemble d'éléments graphiques comprenant au moins un élément graphique actionnable par un utilisateur, agencés selon un agencement propre à ladite interface homme-machine à simuler, chaque vue d'une fenêtre d'affichage correspondant à un état visuel de chaque élément graphique de ladite fenêtre d'affichage parmi une pluralité d'états visuels possible.

Le dispositif selon l'invention comporte des moyens de stockage d'une description en langage de balisage associée à l'interface homme-machine à simuler, ladite description utilisant un ensemble de balises prédéterminées, comportant, une description de chaque vue de ladite fenêtre d'affichage, et une description de chaque état d'affichage parmi un ensemble d'états d'affichage possibles, chaque état d'affichage étant défini par au moins une vue d'une fenêtre d'affichage et au moins un identifiant d'un état d'affichage suivant.

Selon une caractéristique, le dispositif selon l'invention comporte :
- des moyens d'affichage sur l'écran d'une vue courante de ladite fenêtre d'affichage correspondant à un état d'affichage courant,
- des moyens d'obtention, en réponse à une action d'un utilisateur sur un des éléments graphiques actionnables, à partir de ladite description en langage de balisage dudit état d'affichage courant, d'un identifiant d'un état d'affichage suivant, et
- des moyens d'affichage sur l'écran de la ou des vues successives de ladite fenêtre d'affichage correspondant audit état d'affichage suivant selon ladite description en langage de balisage.

Selon un troisième aspect, l'invention concerne un programme d'ordinateur apte à être mis en oeuvre par un processeur, **caractérisé en ce qu'il** comprend des portions de code logiciel apte à mettre en oeuvre le procédé de simulation d'interface homme-machine tel que brièvement exposé ci-dessus, lorsqu'il est chargé et exécuté par le processeur.

D'autres caractéristiques et avantages de l'invention ressortiront de la description qui en est donnée ci-dessous, à titre indicatif et nullement limitatif, en référence aux figures annexées, parmi lesquelles :
- les figures 1, 2 et 3 illustrent une succession de vues d'une fenêtre d'affichage représentative d'une interface-homme machine ;
- la figure 4 est un schéma illustrant une mise en oeuvre d'un procédé de simulation d'interface homme-machine selon l'invention ;
- la figure 5 est un schéma représentant les blocs fonctionnels d'un dispositif programmable apte à mettre en oeuvre l'invention ;
- la figure 6 est un organigramme d'un mode de réalisation d'un procédé de simulation d'interface homme-machine selon l'invention, et
- la figure 7 est un organigramme représentatif des étapes mises en oeuvre pour l'obtention d'un identifiant d'un état d'affichage suivant selon un mode de réalisation de l'invention.

L'invention sera décrite dans l'exemple particulier de simulation d'interface homme-machine d'un appareil sur l'écran d'un dispositif programmable, par exemple un ordinateur, l'interface homme-machine fournissant un nombre donné de possibilités d'interaction avec l'utilisateur.

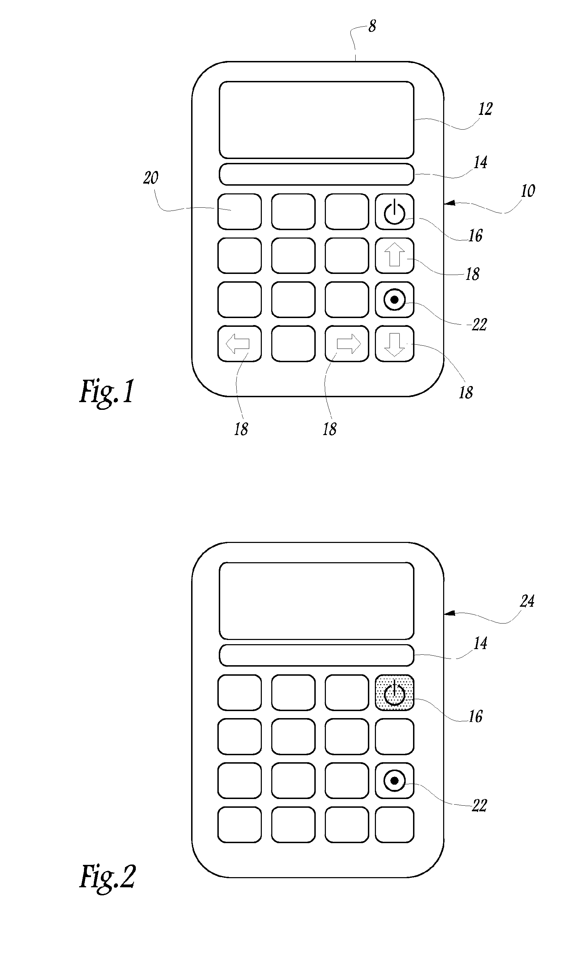

Typiquement, une interface homme-machine simulable en utilisant le procédé de l'invention est représentée par une fenêtre d'affichage telle qu'illustrée dans les figures 1 à 3. Une succession de vues d'une telle fenêtre d'affichage est typiquement affichée sur l'écran d'un ordinateur, non représenté dans les figures 1 à 3, chaque vue d'une fenêtre d'affichage correspondant à un état visuel de chaque élément graphique de ladite fenêtre d'affichage parmi une pluralité d'états visuels possibles. Par exemple, pour un voyant lumineux donné, une première vue correspond à un état visuel du voyant rouge et une deuxième vue correspond à un état visuel du voyant vert.

La fenêtre d'affichage 8 représente l'interface homme-machine d'un appareil qui est dans cet exemple une calculatrice, dans une première vue 10, correspondant au mode « éteint » de l'appareil, comportant un ensemble d'éléments graphiques, correspondant à des éléments physiques ou graphiques présents dans l'interface homme-machine de l'appareil, qui sont :
- un écran principal d'affichage 12, apte à afficher diverses données graphiques ou alphanumériques,
- un écran secondaire 14 utilisé comme barre d'état apte à changer d'aspect visuel, par exemple de couleur, selon le mode « allumé » ou « éteint » de l'appareil,
- un bouton de mise en marche 16,
- plusieurs boutons de commande directionnelle 18, identifiés chacun par une flèche correspondante,
- plusieurs boutons de commande numérique 20, portant chacun un chiffre associé, et
- un bouton 22 de confirmation de sélection.

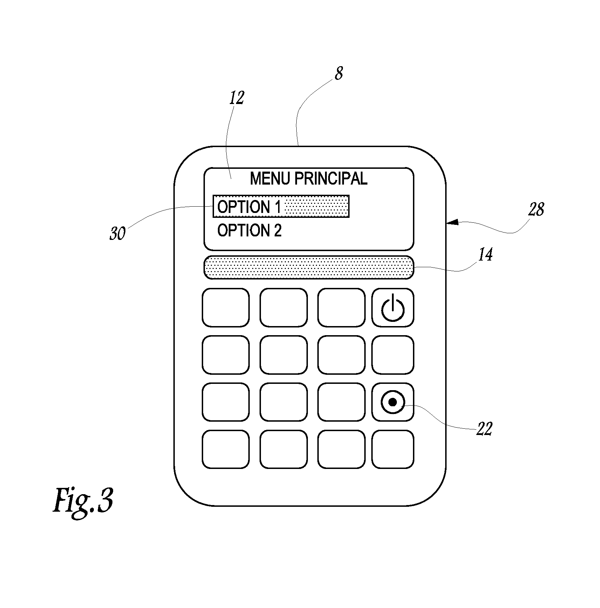

Lorsqu'un utilisateur actionne le bouton de mise en marche 16, ce qui est simulé par le fait de sélectionner le bouton 16 via un moyen de pointage, comme par exemple la souris, l'aspect visuel du bouton 16 est modifié, comme illustré dans la vue 24 de la fenêtre d'affichage 8 illustrée à la figure 2, puis la vue de la fenêtre d'affichage est modifiée pour passer à la vue 28 illustrée à la figure 3.

Dans la vue 28 de la figure 3, l'aspect visuel de la barre d'état 14 est modifié pour illustrer le passage de l'appareil en mode « allumé », et un texte 30 est affiché à l'intérieur de l'écran d'affichage 12, correspondant au « MENU PRINCIPAL » qui propose deux options sélectionnables, « OPTION 1 » et « OPTION 2 ». La première option « OPTION 1 » est affichée en mode « sélectionné » (affichage grisé) sur la figure 3. Chacune des options est par exemple sélectionnable par un déplacement en utilisant les flèches 18 suivi d'une validation par le bouton de commande 22.

Une telle action de sélection de l'utilisateur entraînerait un changement de la vue d'affichage de la fenêtre 8, qui n'a pas été représenté.

On comprend donc par l'exemple des figures 1 à 3 ce qu'on entend par la simulation d'une interface homme-machine d'un appareil au sens de l'invention : une telle interface est représentée dans une ou plusieurs fenêtres d'affichage sur l'écran d'un dispositif programmable, tel un ordinateur, et les actions possibles sur l'interface homme-machine sont simulées via des actions réalisables à l'aide de l'interface du dispositif programmable, et la vue ou la succession de vues correspondant à l'action de l'utilisateur est affichée ensuite sur l'écran du dispositif programmable.

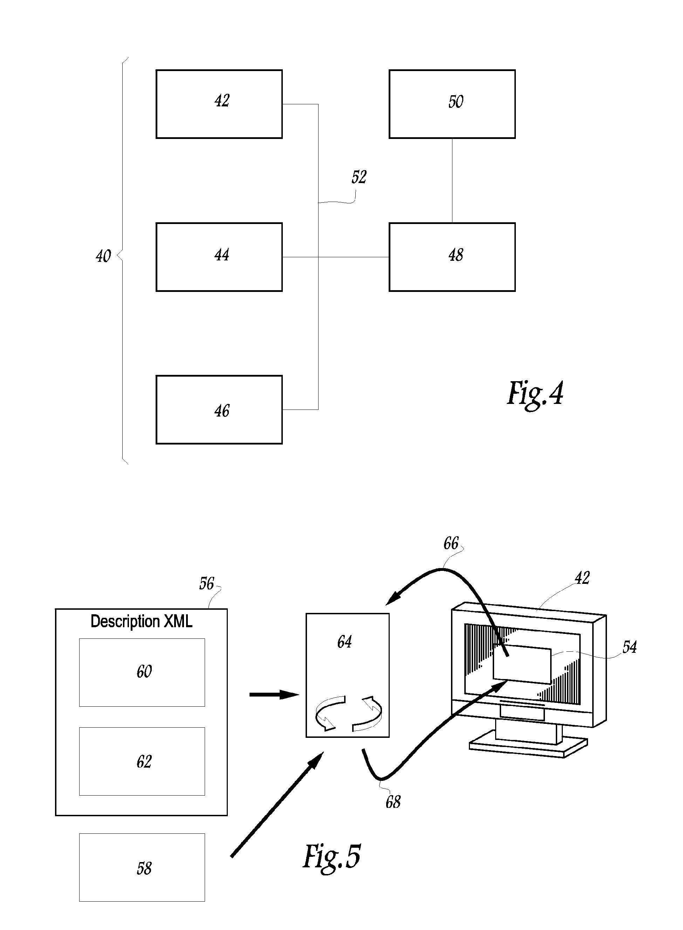

L'invention est typiquement mise en oeuvre dans un dispositif programmable, tel qu'un ordinateur, dont les principaux blocs fonctionnels sont schématiquement représentés à la figure 4.

Ainsi, un dispositif programmable 40 apte à mettre en oeuvre l'invention comprend un écran 42, un moyen 44 de saisie des commandes d'un utilisateur, par exemple un clavier, optionnellement un moyen supplémentaire de pointage 46, tel une souris, permettant de sélectionner des éléments graphiques affichés sur l'écran 42, une unité centrale de traitement 48, ou CPU, apte à exécuter des instructions de programme de commande lorsque le dispositif programmable est mis sous tension. Le dispositif programmable 40 comporte également des moyens de stockage d'informations 50, par exemple des registres, aptes à stocker des instructions de code exécutable permettant la mise en oeuvre de traitements logiciels. Les divers blocs fonctionnels du dispositif 40 décrits ci-dessus sont connectés via un bus de communication 52.

La figure 5 illustre un exemple de réalisation selon l'invention d'une simulation d'interface homme-machine telle que décrite en référence aux figures 1 à 3.

Dans l'exemple de la figure 5, une fenêtre d'affichage 54 d'une interface homme-machine d'un appareil est représentée dans une vue courante sur l'écran 42 d'un dispositif programmable 40 (non représenté sur la figure 5).

Une description 56 en langage de balisage, par exemple en langage XML, permet de décrire les éléments graphiques à afficher, leurs aspects visuels associés et l'enchaînement des vues d'affichage. La description 56 est mémorisée par exemple dans un fichier de description stocké dans un des moyens de stockage d'informations 50 du dispositif programmable.

Un ensemble 58 d'éléments visuels supplémentaires, par exemple des images numériques, utiles pour définir les éléments graphiques formant l'interface homme-machine à simuler sont également stockés, sous forme appropriée, dans un des moyens de stockage d'informations 50 du dispositif.

Le fichier de description 56 est, dans le mode de réalisation préféré, en langage XML.

Le langage XML est une syntaxe pour définir des langages informatiques, ce qui permet de créer des langages adaptés à des utilisations différentes pouvant cependant être traités par de mêmes outils. Un document XML est composé d'éléments, chaque élément étant délimité par une balise ouvrante comportant le nom de l'élément (par exemple: <balise>) et une balise fermante comportant elle aussi le nom de l'élément (par exemple: </balise>). Chaque élément peut contenir d'autres éléments de façon hiérarchique ou des données textuelles définissant un contenu. Un élément peut également être précisé par des attributs, chaque attribut étant défini par un nom et ayant une valeur. Les attributs sont alors placés dans la balise ouvrante de l'élément qu'ils précisent (par exemple: <balise attribut="valeur">). La syntaxe XML permet aussi de définir des commentaires (par exemple: <!--Commentaire--> ).

Dans un mode de réalisation illustré à la figure 5, le fichier de description 56 comporte une première partie 60 comportant une description de chaque vue possible de fenêtre d'affichage, et une deuxième partie 62 comportant une description de chaque état d'affichage parmi un ensemble d'états d'affichage possibles, chaque état d'affichage étant défini par au moins une vue d'une fenêtre d'affichage et au moins un identifiant d'un état d'affichage suivant en réponse à une action d'un utilisateur.

Les balises à utiliser pour définir l'ensemble des descriptions sont prédéfinies. Le nombre d'éléments de chacune des descriptions 60, 62 et le contenu des éléments, et notamment la valeur des attributs, sont propres à l'interface homme-machine à simuler.

Par exemple, selon un mode de réalisation nullement limitatif, la première partie 60 peut comporter les éléments définis par les balises suivantes : <BUTTON> pour définir des éléments graphiques de type « bouton » actionnable par l'utilisateur, <LED> pour définir des éléments graphiques de type voyant lumineux ou barre d'état, <SCREEN> pour définir une fenêtre d'affichage et <VIEW> pour définir une vue associée à une fenêtre d'affichage.

Typiquement, chaque élément délimité par une balise a un identifiant associé, et un ensemble d'attributs.

Par exemple, pour la définition d'un élément graphique « bouton » on utilise le code XML suivant :
<BUTTON x="31" y="154" w="49" h="40" tooltip="Touche 1" value="1 key="NUMPAD1 ">BUTTON_1 </BUTTON>

Les attributs « x », « y », « w », « h » précisent respectivement la position spatiale et la taille en termes de largeur et de hauteur de l'élément graphique bouton, l'attribut « value » la valeur associée au bouton - valeur "1" dans l'exemple - et l'identifiant associé "BUTTON_1 ". L'attribut « tooltip » permet d'afficher une aide pour le bouton et l'attribut « key » correspond au raccourci clavier associé au bouton.

De manière similaire, un voyant lumineux est décrit selon un exemple de code XML par :

```
       <LED ID="LED_LEFT" x="33" y="523" w="10" h="45">
              <STATES>
                     <STATE filename="ma_led_off.jpg">OFF</STATE>
                     <STATE filename="ma_led_red.jpg">RED</STATE>
                     <STATE filename="ma_led_green.jpg">GREEN</STATE>
              </STATES>
       </LED>
```

Dans cet exemple, un voyant lumineux est défini par son identifiant « ID », son positionnement sur l'écran « x », « y », sa taille « w », « h » et ses divers états <STATES>, qui sont : « éteint » (OFF), vert (GREEN), rouge (RED). Dans cet exemple, on voit qu'un fichier contenant une image correspondant à chaque état, par exemple identifié par son nom de fichier ou tout autre identifiant de type adresse, valeur de l'attribut « filename », définit l'affichage correspondant à chaque état. Chaque fichier auquel l'attribut « filename » fait référence fait partie de l'ensemble d'éléments 58, par exemple stocké dans un répertoire prédéterminé de l'espace de stockage 50.

Dans la deuxième partie 62, sont définis les divers états d'affichage et leurs enchaînements, également via des balises prédéfinies, le nombre et l'enchaînement des états d'affichage étant propres à l'interface homme-machine à simuler.

Par exemple, une balise <SEQUENCE> est utilisée pour définir un état d'affichage, une balise <ACTION> est utilisée pour définir des actions ou sélections parmi les éléments graphiques actionnables.

Par exemple, on définit un état d'affichage « MAIN MENU » qui correspond à une fenêtre d'affichage avec un menu principal affiché, tel qu'illustré à la figure 3.

```
       <!--MAIN_MENU->
        <SEQUENCE>
              <ID>MAIN_MENU</ID>
              <SCREEN>
                     <ID>MAIN</ID>
                     <VIEW>VIEW_MAIN_MENU</VIEW>
              </SCREEN>
              <ACTION selection="OPTION_1" sequence="OPT1_MENU" />
              <ACTION selection="OPTION_2" sequence="OPT2_MENU" />
        </SEQUENCE>
```

Dans cet exemple de code en langage de balisage XML il est indiqué d'abord par une ligne de commentaire qu'il s'agit de l'état d'affichage appelé "main_menu", dont l'identifiant est "MAIN_MENU", ce qui est indiqué par la balise <ID>. L'affichage correspondant sur l'écran du dispositif est la vue « VIEW_MAIN » de la fenêtre d'affichage d'identifiant « MAIN », ces deux informations étant définies par la balise <SCREEN>. Les éléments graphiques composant la vue « VIEW_MAIN » sont décrits dans la première partie 60 du document 56 en langage de balisage.

Typiquement, cet exemple correspond à l'affichage de la vue 28 de la fenêtre d'affichage 8 illustré à la figure 3. Dans cet exemple, comme expliqué précédemment en référence à la figure 3, le texte « MENU PRINCIPAL » est affiché sur l'écran d'affichage 12, et les deux options « OPTION 1 » ou « OPTION 2 » sont sélectionnables par un utilisateur. Les balises <ACTION> de la définition de l'état d'affichage « MAIN_MENU » définissent respectivement les états d'affichage suivants selon la sélection de l'utilisateur.

Comme le montrent les exemples ci-dessus, une description en langage de balisage de type XML est facilement compréhensible lorsque les balises prédéterminées sont sélectionnées judicieusement, par conséquent il est aisé pour un opérateur ayant des connaissances informatiques minimales de réaliser une description en langage de balisage d'une interface homme-machine d'un appareil selon l'invention.

Dans un mode de réalisation alternatif, une telle description n'est pas réalisée par un opérateur directement, mais automatiquement à partir d'une description d'une telle interface homme-machine et de son fonctionnement par un opérateur.

La description en langage de balisage 56 et les éléments visuels complémentaires 58 sont utilisés comme expliqué ci-après par un programme logiciel 64 mettant en oeuvre le procédé de l'invention, comme expliqué plus en détail ci-après.

Typiquement, selon un mode de réalisation, la description en langage de balisage 56 et les éléments visuels 58 sont mémorisés lors du lancement du programme logiciel 64, et une vue initiale ou une succession de vues correspondant à un état d'affichage initial de la fenêtre d'affichage représentative de l'interface homme-machine sont lancées. Ensuite, lorsque l'utilisateur fait une action 66 sur un des éléments graphiques activables affichés, cette action 66 est récupérée, et l'état d'affichage suivant correspondant à l'action 66 est déterminé. En réponse, l'affichage 68 correspondant à l'état d'affichage suivant est effectué sur l'écran 42, donc la vue ou la succession de vues de la fenêtre d'affichage est mise en oeuvre.

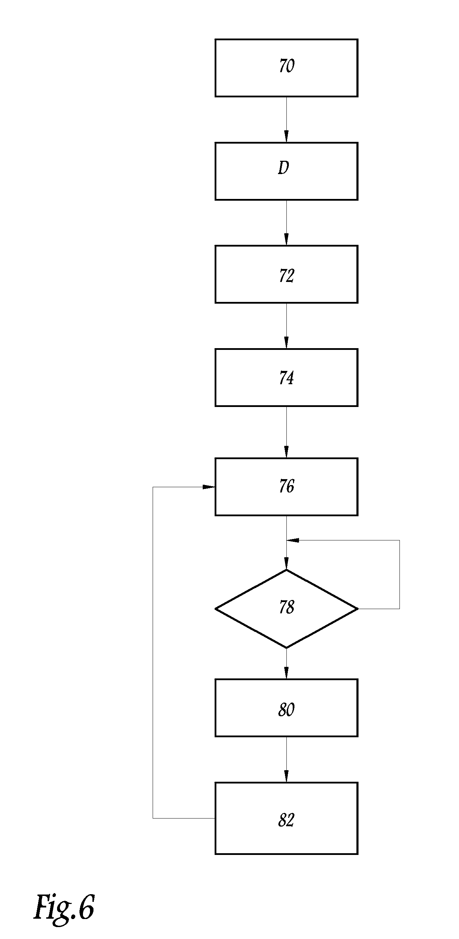

La figure 6 illustre les principales étapes d'un mode de réalisation du procédé de simulation de l'interface homme-machine d'un appareil selon l'invention, mis en oeuvre par un processeur 48 d'un dispositif 40 apte à mettre en oeuvre l'invention.

Une première étape préalable 70 met en oeuvre la génération d'une description D en langage de balisage, en utilisant un ensemble de balises prédéterminées, comme expliqué ci-dessus en référence à la figure 5. Comme expliqué précédemment, selon un mode de réalisation préféré, cette étape est mise en oeuvre par un opérateur. La description D générée est mémorisée, par exemple dans un fichier.

Dans un mode de réalisation, lors de l'exécution du programme mettant en oeuvre le procédé de l'invention, une première étape de chargement en mémoire 72 de la description D en langage de balisage est mise en oeuvre. Ainsi, on dispose d'un modèle d'objet de programmation de la description D facilement exploitable pour effectuer un parcours, lire et mettre en oeuvre les données décrites dans ce modèle.

Ensuite, une variable désignant l'état d'affichage courant Ec est initialisée à l'étape 74 comme étant égale à un état d'affichage initial prédéterminé, par exemple l'affichage d'une vue montrant l'interface homme-machine de l'appareil lorsque l'appareil est dans le mode « éteint ».

A l'étape suivante 76, pour l'état d'affichage courant Ec, la vue ou la succession de vues de la fenêtre d'affichage correspondante est affichée sur l'écran 42 du dispositif 40, ces vues étant obtenues à partir du modèle objet de programmation stocké en mémoire, correspondant à la description D.

En pratique, cela consiste en le parcours de la deuxième partie 62 de la description XML de l'état d'affichage courant, de l'identification des balises correspondant aux vues à afficher. Ensuite, pour chacune de ces balises, la description de la vue d'affichage correspondante est identifiée dans la première partie 60 de la description, et mise en oeuvre selon les divers éléments graphiques décrits.

Une étape suivante d'attente 78 d'action d'un utilisateur est mise en oeuvre. Tant que l'utilisateur n'effectue pas d'action sur la dernière vue affichée sur l'écran 42, le programme reste dans l'étape d'attente 78.

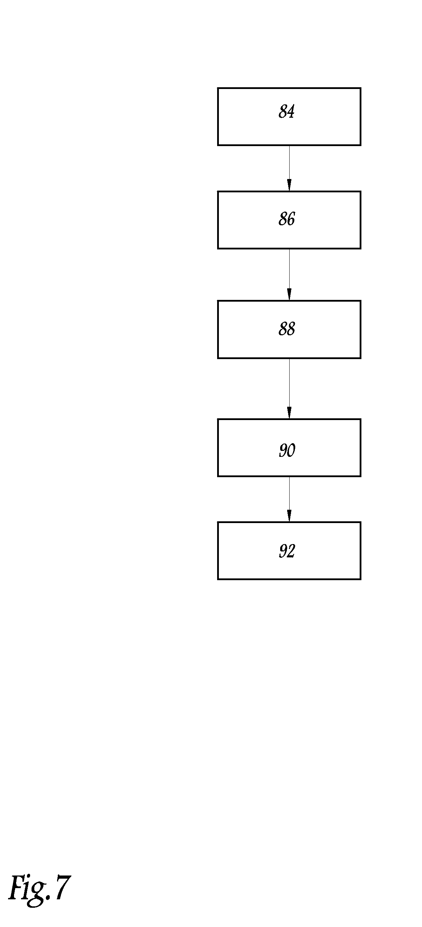

Lors d'une action utilisateur, l'étape d'obtention de l'identifiant 80 de l'état d'affichage suivant Es, en exploitant la description D mise en mémoire sous forme d'objet de programmation, est mise en oeuvre. Cette étape sera décrite plus en détail à la figure 7.

L'étape 80 est suivie de l'étape 82 de mise à jour du paramètre état d'affichage courant Ec à la valeur Es déterminée à l'étape 80.

L'étape 82 est suivie de l'étape 76 d'affichage de la vue ou de la succession de vues correspondant à l'état d'affichage courant Ec déjà décrite.

De manière classique, l'utilisateur a la possibilité d'interrompre à tout moment l'exécution du programme mettant en oeuvre la simulation de l'interface homme-machine, par exemple en « quittant » le programme par une commande adéquate.

La figure 7 illustre en détail la mise en oeuvre de l'étape 80 d'obtention d'un état d'affichage suivant Es.

Partant de l'étape 78 déjà décrite, lorsque l'utilisateur effectue une action A à l'aide d'un des moyens d'interfaçage mis à sa disposition, par exemple le clavier 44 ou la souris 46, une première étape 84 consiste à récupérer l'action de l'utilisateur. Par exemple, en reprenant l'exemple de simulation d'interface graphique illustré dans les figures 1 à 3, l'utilisateur sélectionne par un « clic » de souris la ligne « OPTION 1 » du « menu principal ».

L'étape 84 est suivie de l'étape 86 de détermination de la valeur d'attribut XML prédéterminée correspondant à l'action A, ici l'attribut « OPTION_1 ».

Ensuite, l'étape suivante 88 consiste à parcourir la description de l'état d'affichage courant Ec pour ensuite trouver la balise <ACTION> correspondant à l'action A, c'est-à-dire la balise <ACTION> dont l'attribut « selection » est à la valeur déterminée à l'étape 86. L'identifiant correspondant à l'état d'affichage suivant, à mettre en oeuvre suite à l'action A, est ensuite extrait à l'étape 90. Dans cet exemple, il s'agit de la valeur de l'attribut « sequence » correspondant, qui est égal à « OPT1_MENU ».

Enfin, l'étape suivante 92 consiste à parcourir la deuxième partie de la description 62, afin de récupérer la description correspondant à l'état d'affichage suivant Es, dont la nom d'identifiant a été déterminé à l'étape 90.

L'étape 92 est suivie de l'étape 82 précédemment décrite en référence à la figure 5.

L'exemple de mode de réalisation décrit en référence aux figures 6 et 7 illustre la simplicité de mise en oeuvre, et l'avantage de l'utilisation d'une description en langage de balisage de type XML avec des balises prédéterminées, permettant le traitement de la description par un procédé de simulation d'interface homme-machine générique.

## Revendications

1. Procédé de simulation de l'interface homme-machine d'un appareil sous forme de succession de vues (10, 24, 28) d'une fenêtre d'affichage (8) sur un écran (42) d'un dispositif programmable (40), une fenêtre d'affichage comprenant un ensemble d'éléments graphiques (12, 14, 16, 18, 20, 22), ledit ensemble d'éléments graphiques comprenant au moins un élément graphique actionnable par un utilisateur, agencés selon un agencement propre à ladite interface homme-machine à simuler, chaque vue (10, 24, 28) d'une fenêtre d'affichage (8) correspondant à un état visuel de chaque élément graphique de ladite fenêtre d'affichage parmi une pluralité d'états visuels possible, **caractérisé en ce qu'il** comporte les étapes suivantes:
- génération (70) d'une description (56) en langage de balisage associée à l'interface homme-machine à simuler, utilisant un ensemble de balises prédéterminées, comportant, une description (60) de chaque vue de ladite fenêtre d'affichage, et une description (62) de chaque état d'affichage parmi un ensemble d'états d'affichage possibles, chaque état d'affichage étant défini par au moins une vue d'une fenêtre d'affichage et au moins un identifiant d'un état d'affichage suivant,
- affichage (76) sur l'écran (42) d'une vue courante de ladite fenêtre d'affichage correspondant à un état d'affichage courant (Ec),
- en réponse à une action d'un utilisateur sur un des éléments graphiques actionnables, obtention (80), à partir de ladite description (56) en langage de balisage dudit état d'affichage courant (Ec), d'un identifiant d'un état d'affichage suivant (Es), et
- affichage (82, 76) sur l'écran de la ou des vues successives de ladite fenêtre d'affichage correspondant audit état d'affichage suivant (Es) selon ladite description en langage de balisage (56).

2. Procédé de simulation d'interface homme-machine selon la revendication 1, dans lequel ladite description (56) en langage de balisage est stockée dans un fichier de description.

3. Procédé de simulation d'interface homme-machine selon l'une quelconque des revendications 1 à 2, dans lequel ladite description en langage de balisage comporte une première partie (60) de description de chaque vue de ladite fenêtre d'affichage, et une deuxième partie (62) de description de chaque état d'affichage parmi un ensemble d'états d'affichage possibles.

4. Procédé de simulation d'interface homme-machine selon l'une quelconque des revendications 1 à 3, dans lequel une dite description d'état d'affichage comporte au moins une balise action associée à une action effectuée sur un élément graphique actionnable, une dite balise action ayant un attribut dont la valeur indique un état d'affichage suivant.

5. Procédé de simulation d'interface homme-machine selon la revendication 4, dans lequel l'obtention (80) d'un identifiant d'un état d'affichage suivant comporte les sous-étapes suivantes :
- détermination (86) d'une valeur d'attribut correspondant à une action effectuée par un utilisateur sur un élément graphique actionnable,
- parcours (88) de la description en langage de balisage dudit état d'affichage courant (Ec) pour déterminer une balise action dont un attribut a une valeur égale à la valeur d'attribut déterminée à l'étape précédente,
- extraction (90) d'un identifiant indiquant un état d'affichage suivant (Es) à partir d'un attribut de la balise action déterminée.

6. Procédé de simulation d'interface homme-machine selon l'une quelconque des revendications précédentes, dans lequel ledit langage de balisage est le langage XML.

7. Dispositif de simulation de l'interface homme-machine d'un appareil, sous forme de succession de vues (10, 24, 28) d'une fenêtre d'affichage (8) affichées sur un écran (42) dudit dispositif, une fenêtre d'affichage comprenant un ensemble d'éléments graphiques(12, 14, 16, 18, 20, 22), ledit ensemble d'éléments graphiques comprenant au moins un élément graphique actionnable par un utilisateur, agencés selon un agencement propre à ladite interface homme-machine à simuler, chaque vue (10, 24, 28) d'une fenêtre d'affichage (8) correspondant à un état visuel de chaque élément graphique de ladite fenêtre d'affichage parmi une pluralité d'états visuels possible, **caractérisé en ce qu'il** comporte :
- des moyens de stockage d'une description (56) en langage de balisage associée à l'interface homme-machine à simuler, ladite description utilisant un ensemble de balises prédéterminées, comportant, une description de chaque vue de ladite fenêtre d'affichage, et une description de chaque état d'affichage parmi un ensemble d'états d'affichage possibles, chaque état d'affichage étant défini par au moins une vue d'une fenêtre d'affichage et au moins un identifiant d'un état d'affichage suivant,
- des moyens d'affichage sur l'écran (42) d'une vue courante de ladite fenêtre d'affichage correspondant à un état d'affichage courant (Ec),
- des moyens d'obtention, en réponse à une action d'un utilisateur sur un des éléments graphiques actionnables, à partir de ladite description (56) en langage de balisage dudit état d'affichage courant (Ec), d'un identifiant d'un état d'affichage suivant (Es), et
- des moyens d'affichage sur l'écran de la ou des vues successives de ladite fenêtre d'affichage correspondant audit état d'affichage suivant (Es) selon ladite description en langage de balisage (56).

8. Programme d'ordinateur apte à être mis en oeuvre par un processeur, **caractérisé en ce qu'il** comprend des portions de code logiciel apte à mettre en oeuvre le procédé de simulation d'interface homme-machine selon l'une des revendications 1 à 6 lorsqu'il est chargé et exécuté par le processeur.
